# EUROPEAN PATENT APPLICATION

(11) **EP 4 475 393 A2**
(43) Date of publication of application: **11.12.2024**
(21) Application number: 24179714.1
(22) Date of filing: 03.06.2024
(51) Int. Cl.: H02K 1/20

(54) **AIRCRAFT ELECTRIC MOTOR STATOR**

(30) Priority: 09.06.2023 US 202318332286
(71) Applicant: Hamilton Sundstrand Corporation, Charlotte, NC 28217-4578 (US)
(72) Inventor: KELLEY, Ryan M., Granby, CT 06035 (US); SALTZMAN, David, Glastonbury, CT 06033 (US); SELLERS, Benjamin, Mt. Airy, MD 21771 (US); CLAVETTE, Jeremy, Farmington, CT 06032 (US)
(74) Representative: Dehns

(57) **Abstract**

According to some embodiments of the present disclosure, an aircraft electric motor is disclosed. The motor includes a rotor (202) comprising a plurality of magnet segments arranged on a frame of the rotor (202). The motor also includes an output shaft operably coupled to the rotor (202) radially inward from the plurality of magnet segments and a stator (212). The stator (212) includes a radially outer rim (224) and at least one winding wrapped about a plurality of stator teeth (226). The stator (212) is arranged around the rotor (202) and includes cooling fins extending radially outward from the radially outer rim (224). The cooling fins include wide fins (234) that have a width w_{w} distributed about the radially outer rim (224) and thin fins (235) that have width wt. The thin fins (235) are disposed between the wide fins (234). The width of the wide fins (234) w_{w} is greater than the width wₜ of the thin fins (235).

## Description

### BACKGROUND

The present disclosure relates to electric motors, and more particularly, to electric motor assemblies used to drive an aircraft cabin air compressor (CAC).

Traditional electric motors may include a stator and a rotor, with electrical motor windings in the stator that, when energized, drive rotation of the rotor about a central axis. Heat is generated in the motor windings, which are located in slots in the stator. The windings are separated from the exterior of the motor by layers of insulation and laminated steel, which makes up the stator. These contributors to internal thermal resistance limit the allowable heat generation and thus the allowable electrical current in the windings.

The energy density of an electric motor is typically limited by heat dissipation from the motor windings of the stator. The requirement to be met is a maximum hot spot temperature in the motor windings that is not to be exceeded. Conventional motor thermal management includes natural convection from fins on the outside of the stator.

### BRIEF DESCRIPTION

According to some embodiments of the present disclosure, an aircraft electric motor is disclosed. The motor includes a rotor comprising a plurality of magnet segments arranged on a frame of the rotor. The motor also includes an output shaft operably coupled to the rotor radially inward from the plurality of magnet segments and a stator. The stator includes a radially outer rim and at least one winding wrapped about a plurality of stator teeth. The stator is arranged around the rotor and includes cooling fins extending radially outward from the radially outer rim. The cooling fins include wide fins that have a width w_{w} distributed about the radially outer rim and thin fins that have width wₜ. The thin fins are disposed between the wide fins. The width of the wide fins w_{w} is greater than the width wₜ of the thin fins.

In addition to one or more of the features described above, or as an alternative to any of the foregoing embodiments, the motor can also include a motor sleeve that surrounds the stator.

In addition to one or more of the features described above, or as an alternative to any of the foregoing embodiments, the motor sleeve can contact the wide fins and not contact the thin fins.

In addition to one or more of the features described above, or as an alternative to any of the foregoing embodiments, wherein wide fins have a height h_{w} and the thin fins have a height ht that is less than the height h_{w} of the wide fins.

In addition to one or more of the features described above, or as an alternative to any of the foregoing embodiments, the output shaft is connected to a compressor.

In addition to one or more of the features described above, or as an alternative to any of the foregoing embodiments, the compressor is a cabin air compressor.

As disclosed is an aircraft electric motor stator that includes: a radially outer rim; a plurality of stator teeth; at least one winding wrapped about the plurality of stator teeth; and cooling fins extending radially outward from the radially outer rim. The cooling fins include wide fins that have a width w_{w} distributed about the radially outer rim and thin fins that have width wₜ disposed between the wide fins. The width of the wide fins w_{w} is greater than the width wₜ thin fins.

In addition to one or more of the features described above, or as an alternative to any of the foregoing embodiments, the stator can be combined with a stator sleeve that surrounds the stator.

In addition to one or more of the features described above, or as an alternative to any of the foregoing embodiments, the stator sleeve contacts the wide fins and does not contact the thin fins.

In addition to one or more of the features described above, or as an alternative to any of the foregoing embodiments, wide fins have a height h_{w} and the thin fins have a height ht that is less than the height h_{w} of the wide fins.

In addition to one or more of the features described above, or as an alternative to any of the foregoing embodiments, the stator can formed of a plurality of laminations.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a partial view of an embodiment of electric motor;
FIG. 2A is a cross-sectional view of one example of prior art stator core of the electric motor;
FIG. 2B is a cross-sectional view of one example of prior art stator core of the electric motor;
FIG. 3A is cross-sectional view of a stator core of the electric motor according to one embodiment;
FIGS. 3B and 3C are perspective portions of a stator with different types of fins that can be used in all embodiments disclosed herein.

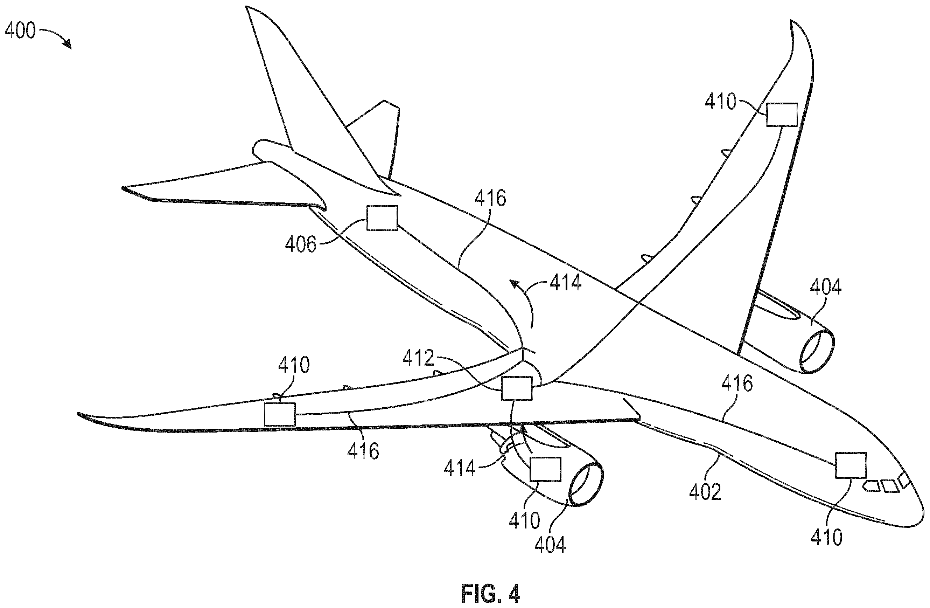

FIG. 4 is a schematic view of a power system of an aircraft that may employ embodiments of the present disclosure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### DETAILED DESCRIPTION

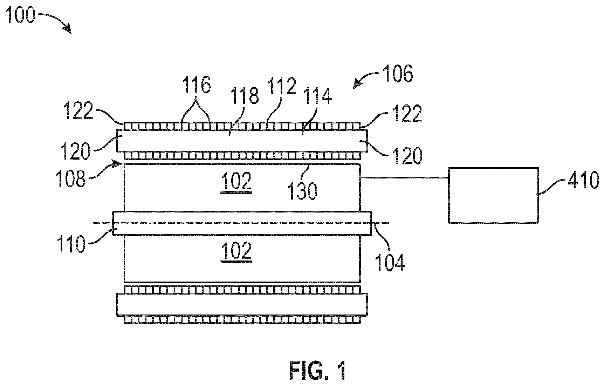

Referring to FIG. 1 a schematic illustration of an electric motor 100 that may incorporate embodiments of the present disclosure are shown. FIG. 1 illustrates a cross-sectional view of the electric motor 100. The electric motor 100 includes a rotor 102 configured to rotate about a rotation axis 104. A stator 106 is located radially outboard of the rotor 102 relative to the rotation axis 104, with a radial air gap 108 located between the rotor 102 and the stator 106. As illustrated, the rotor 102 may be mounted on a shaft 110 which may impart rotational movement to the rotor 102 or may be driven by rotation of the rotor 102, as will be appreciated by those of skill in the art. The rotor 102 and the shaft 110 may be fixed together such that the rotor 102 and the shaft 110 rotate about the rotation axis 104 together as one piece.

The stator 106 includes a stator core 112 in which a plurality of electrically conductive stator windings 114 are disposed. In some embodiments, such as shown in FIG. 1, the stator core 112 is formed from a plurality of axially stacked laminations 116, which are stacked along the rotation axis 104. In some embodiments, the laminations 116 are formed from a steel material, but one skilled in the art will readily appreciate that other materials may be utilized. The stator windings 114, as shown, include core segments 118 extending through the stator core 112 and end turn segments 120 extending from each axial stator end 122 of the stator core 112 and connecting circumferentially adjacent core segments 118. When the stator windings 114 are energized via an electrical current therethrough, the resulting field drives rotation of the rotor 102 about the rotation axis 104. Although FIG. 1 illustrates the stator core 112 arranged radially inward from the stator windings 114, it will be appreciated that other configurations are possible without departing from the scope of the present disclosure. For example, in some embodiments, the stator structure may be arranged radially inward from a rotating rotor structure.

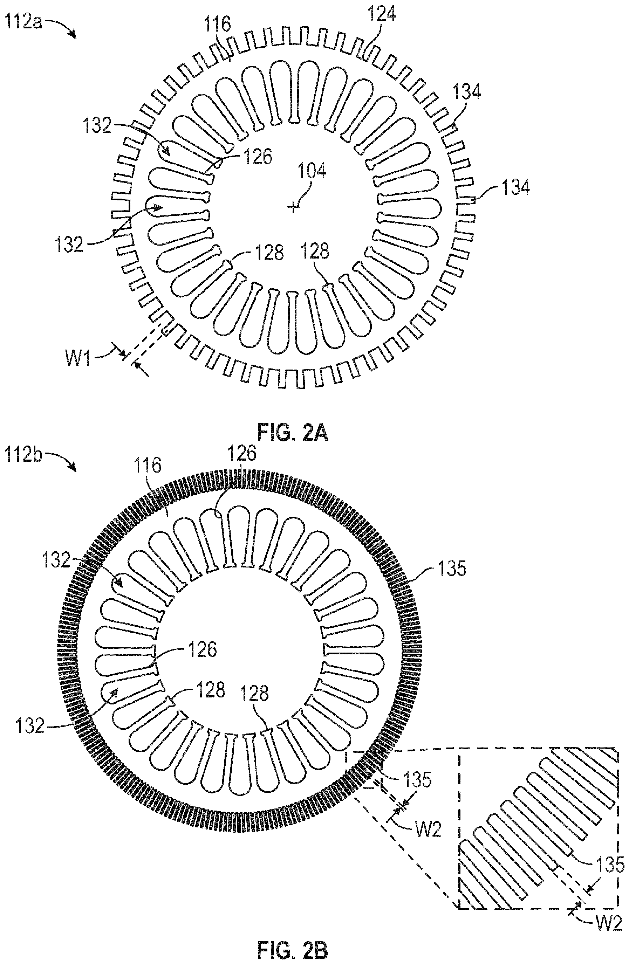

FIG. 2A is an axial cross-sectional view of a prior art stator core 112a. Each lamination 116 of the stator core 112 includes a radially outer rim 124 with a plurality of stator teeth 126 extending radially inwardly from the outer rim 124 toward the rotation axis 104. Each of the stator teeth 126 terminate at a tooth tip 128, which, together with a rotor outer surface 130 (shown in FIG. 1) of the rotor 102, may define the radial air gap 108. Circumferentially adjacent stator teeth 126 define an axially extending tooth gap 132 therebetween. Further, in some embodiments, a plurality of stator fins 134 extend radially outwardly from the outer rim 124. The fins 134 shown in FIG. 2A have width (w1) and shall be referred to as wide fins.

FIG. 2B is an axial cross-sectional view of another prior art stator core 112b. Each lamination 116 of the stator core 112 includes a radially outer rim 124 with a plurality of stator teeth 126 extending radially inwardly from the outer rim 124 toward the rotation axis 104. Each of the stator teeth 126 terminate at a tooth tip 128, which, together with a rotor outer surface 130 (shown in FIG. 1) of the rotor 102, may define the radial air gap 108. Circumferentially adjacent stator teeth 126 define an axially extending tooth gap 132 therebetween. Further, in some embodiments, a plurality of stator fins 134 extend radially outwardly from the outer rim 124. The fins 134 shown in FIG. 2B have width (w2) and shall be referred to as narrow fins.

Disclosed herein are stators (and motors with stators) that include both types of fins. For example, the stator can include, for example, narrow fins interspersed with wide fins. The wide fins can be interspersed periodically in one embodiment. In one embodiment, the wide fins are longer than the narrow fins such that they bear more if not all of the forces between the stator and a housing (e.g., motor housing) during either or both of installation and operation.

Stated differently, the use of wide (thick) fins for structural support and thin fins for heat transfer allows for providing the advantages noted above while minimizing the downsides of each. In one embodiment, design allows for the minimum number of thick fins required for structural considerations, which minimizes unnecessary weight. The remaining space is then free to utilize thin fins, which have more surface area per pound, boosting overall heat removal performance. The thinner fins can be left slightly shorter than the wide fins to ensure they serve no structural function unintentionally.

As an example, if a stator had 60 fins that are 0.1" thick, but the anti-rotation calculations only require 30 wide fins, the other 30 fins can be split into 120 thins fins that are 0.025" thick, giving the unit 4 times the heat transfer surface area for the same weight and open flow area (pressure drop).

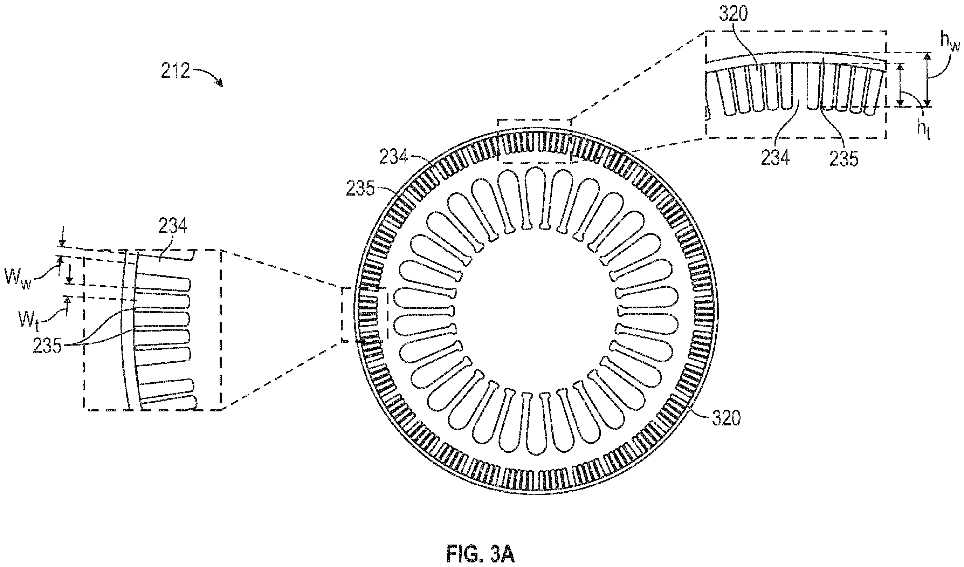

FIG. 3A is an axial cross-sectional view of a stator core 212 according to one embodiment. Each lamination 216 of the stator core 212 includes a radially outer rim 224 with a plurality of stator teeth 226 extending radially inwardly from the outer rim 224 toward the rotation axis 204. Each of the stator teeth 226 terminate at a tooth tip 228, which, together with a rotor outer surface 130 (shown in FIG. 1) of the rotor 202, may define the radial air gap 208. Circumferentially adjacent stator teeth 126 define an axially extending tooth gap 232 therebetween. Further, in some embodiments, a plurality of stator fins 234, 235 extend radially outwardly from the outer rim 224. The fins 234 are so-called wide fins and a have width w_{w} and the fins 235 are thin fins and have a width wₜ. The widths are cross sectional widths of the fins.

As noted above, the wide fins 234 can provide structural support so that the stator 212 may be press fit into a stator sleeve/motor housing 320. As such, the wide fins 234 can be longer than the thin fins 235. As shown in FIG. 3A, the wide fins 234 have height h_{w} and the thin fins have a height ht. In one embodiment, h_{w} is greater than ht. This allows the wide fins 234 to provide structural support and protect the thin fins 235 from bending or otherwise being damaged either during installation or during operation.

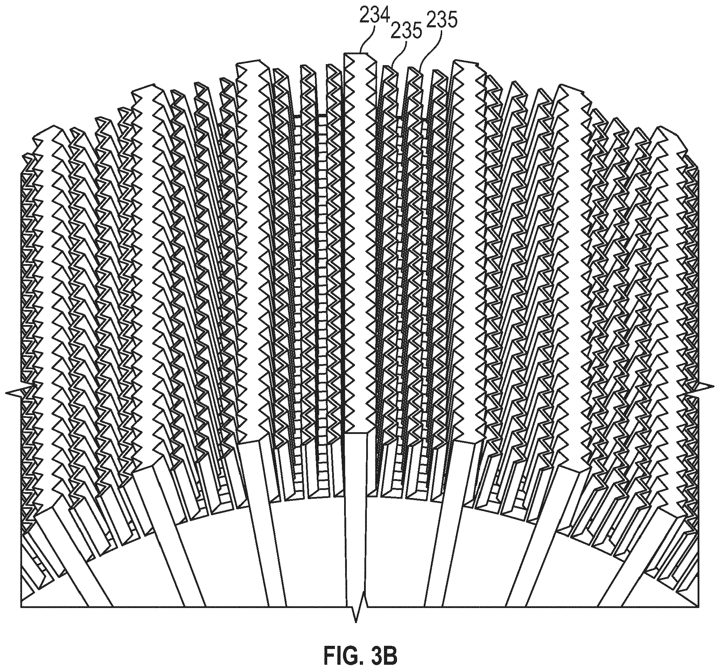

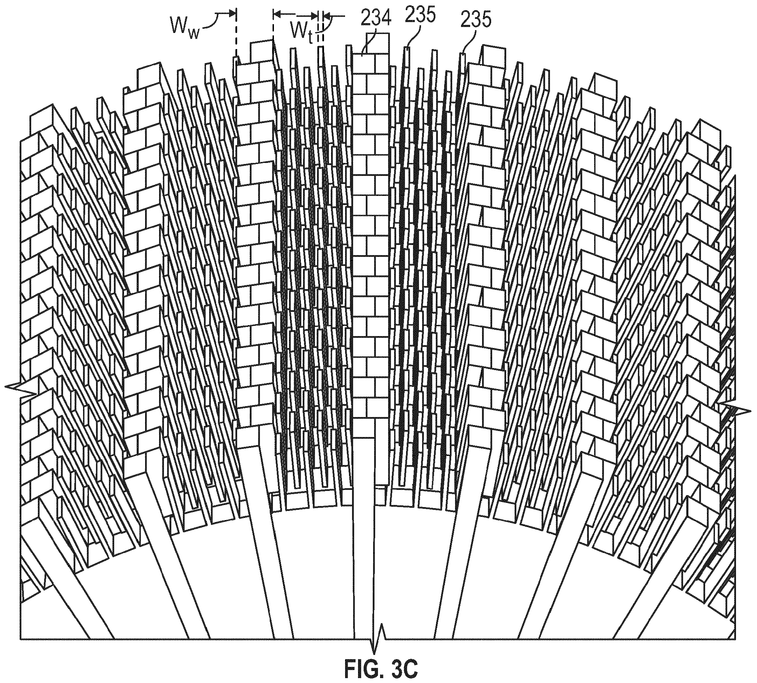

In the above description the fins have been described and shown as flat. The fins can also have different shapes such as wavy fins (see FIG. 3B). In an example, the wide fins 234 can be a combination of discreet blocks (see FIG. 3C) and the thin fins 234 can be splits portions of a flat fin. Also, any of the fin types can be mixed and matched if desired. The fins 234, 235 respectively have cross sectional widths w_{w}, and Wt.

Referring now to FIG. 6, a power system 400 of an aircraft 402 is schematically shown. The power system 400 includes one or more engines 404, one or more electric motors 406 that include embodiments of the stator described herein. The power system also includes a power bus electrically connecting the various power sources 404, 406, and a device 410 that may be powered by the engines 404 and/or motors 406 as shown in FIG. 1. Examples of such devices include a cabin air compressor (CAC) used in an environmental control system for the aircraft. The power system 400 includes a power distribution system 412 that distributes power 1314 through power lines or cables 416.

Advantageously, embodiments of the present disclosure provide for improved electric motors for aircraft and aviation applications. The aircraft electric motors of the present disclosure provide for improved both strong and cooled machines by providing both thin and wide fins as described above.

The terms "about" and "substantially" are intended to include the degree of error associated with measurement of the particular quantity based upon the equipment available at the time of filing the application. For example, "about" or "substantially" can include a range of ± 5% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An aircraft electric motor comprising:
a rotor (202) comprising a plurality of magnet segments arranged on a frame of the rotor (202);
an output shaft operably coupled to the rotor (202) radially inward from the plurality of magnet segments; and
a stator (212) comprising a radially outer rim (224) and at least one winding wrapped about a plurality of stator teeth (226), the stator (212) arranged around the rotor (202), wherein the stator (212) includes cooling fins extending radially outward from the radially outer rim (224);
wherein the cooling fins include wide fins (234) that have a width w_{w} distributed about the radially outer rim (224) and thin fins (235) that have a width wₜ disposed between the wide fins (234);
wherein the width of the wide fins (234) w_{w} is greater than the width wₜ of the thin fins (235).

2. The aircraft electric motor of claim 1, further comprising:
a motor sleeve that surrounds the stator (212).

3. The aircraft electric motor of claim 2, wherein the motor sleeve contacts the wide fins (234) and does not contact the thin fins (235).

4. The aircraft electric motor claim 3, wherein the wide fins (234) have a height h_{w} and the thin fins (235) have a height ht that is less than the height h_{w} of the wide fins (234).

5. The aircraft electric motor of claim 1, wherein the wide fins (234) are flat fins.

6. The aircraft electric motor of claim 5, wherein the thin fins (235) are flat fins.

7. The aircraft electric motor of claim 1, wherein the wide fins (234) are wavy or block shaped fins.

8. The aircraft electric motor of claim 7, wherein the wide fins (234) are wavy or block shaped fins.

9. The aircraft electric motor of any preceding claim, wherein the output shaft is connected to a compressor.

10. An aircraft electric motor stator, the stator comprising:
a radially outer rim (224);
a plurality of stator teeth (226);
at least one winding wrapped about the plurality of stator teeth (226); and
cooling fins extending radially outward from the radially outer rim (224);
wherein the cooling fins include wide fins (234) that have a width w_{w} distributed about the radially outer rim (224) and thin fins (235) that have width wₜ disposed between the wide fins (234);
wherein the width of the wide fins (234) w_{w} is greater than the width wₜ of the thin fins (235).

11. The aircraft electric motor stator of claim 10, in combination with a stator sleeve that surrounds the stator (212), and optionally wherein the stator sleeve contacts the wide fins (234) and does not contact the thin fins (235), and optionally wherein the wide fins (234) have a height h_{w} and the thin fins (235) have a height ht that is less than the height h_{w} of the wide fins (234), and optionally wherein the stator (212) is formed of a plurality of laminations.

12. The aircraft electric motor stator of claim 10, wherein the wide fins (234) are flat fins, and optionally wherein the thin fins (235) are flat fins.

13. The aircraft electric motor stator of claim 10, wherein the wide fins (234) are wavy or block shaped fins, and optionally wherein the wide fins (234) are wavy or block shaped fins.

14. A method of forming an aircraft motor, the method comprising:
forming a rotor (202) comprising a plurality of magnet segments arranged on a frame of the rotor (202);
forming an output shaft operably coupled to the rotor (202) radially inward from the plurality of magnet segments; and
arranging a stator (212) comprising a radially outer rim (224) and at least one winding wrapped about a plurality of stator teeth (226) around the rotor (202), wherein the stator (212) includes cooling fins extending radially outward from the radially outer rim (224);
wherein the cooling fins include wide fins (234) that have a width w_{w} distributed about the radially outer rim (224) and thin fins (235) that have a width wₜ disposed between the wide fins (234);
wherein the width of the wide fins (234) w_{w} is greater than the width wₜ of the thin fins (235).

15. The method of claim 14, comprising:
arranging the stator (212) in a motor sleeve so that the motor sleeve contacts the wide fins (234) and does not contact the thin fins (235).
